# EUROPÄISCHE PATENTSCHRIFT

(11) **EP 1 155 897 B1**
(45) Veröffentlichungstag und Bekanntmachung des Hinweises auf die Patenterteilung: **30.03.2005**
(21) Anmeldenummer: 01890146.2
(22) Anmeldetag: 17.05.2001
(51) Int. Cl.: B60K 17/04

(54) **Kart-Antriebseinrichtung**
Drive means for kart
Dispositif d'entraînement pour kart

(30) Priorität: 19.05.2000 AT 8752000
(43) Veröffentlichungstag der Anmeldung: 21.11.2001
(73) Patentinhaber: BRP-Rotax GmbH & Co. KG, 4623 Gunskirchen (AT)
(72) Erfinder: Korenjak, Norbert, 4651 Stadl-Paura (AT); Rütershoff, Bernhard, 4650 Edt bei Lambach (AT)
(74) Vertreter: Harringer, Thomas

(56) Entgegenhaltungen:
- WO-A-99/12797
- FR-A- 2 302 000
- GB-A- 2 212 464

## Beschreibung

Die Erfindung bezieht sich auf eine Kart-Antriebseinrichtung mit den Merkmalen des Oberbegriffs von Anspruch 1, welche aus der FR-A-2 302 000 bekannt sind.

Karts sind Kraftfahrzeuge, die Freizeit- und Sportzwecken dienen. Zur Kraftübertragung vom Motor zur Hinterradantriebswelle wird bei Karts üblicherweise eine Kette eingesetzt, welche über ein Motorritzel und ein auf der Hinterradantriebswelle sitzendes Kettenrad gelegt ist. Um mit diesem einstufigen Kettentrieb das erforderliche große Untersetzungsverhältnis realisieren zu können, ist es notwendig, das Motorritzel extrem klein auszuführen (Zähnezahl: 9-11). Noch kleinere Ritzel sind technisch nicht möglich. Der Vergrößerung des Abtriebskettenrades auf der Hinterradantriebswelle ist andererseits durch die geringe Bodenfreiheit des Fahrzeugs eine Grenze gesetzt. Ein zu großes Abtriebskettenrad führt zum Aufsitzen desselben auf dem Boden. Die Kette läuft frei, also ohne Kettenschutz um. Die Schmierung der Kette erfolgt in mehr oder minder regelmäßigen Abständen von Hand.

Diese extremen Einsatzbedingungen bewirken zusammen mit der hohen Umlaufgeschwindigkeit der Kette - moderne Kartmotoren drehen bis zu 21000 U/min - eine extreme Beanspruchung des Kettentriebs verbunden mit hohem Verschleiß, raschem Wirkungsgradabfall, kurzer Lebensdauer und hohen Lärmemissionen. Die Folge ist, dass die an sich teure Kette sowie das Kettenritzel in sehr kurzen Abständen ersetzt werden müssen.

In CH 590149 A und FR 2302000 A (und ähnlich in GB 2 212 464 A) wird vorgeschlagen, den Kettentrieb, der in der WO-A-99/12797 verwendet wird, durch ein Zahnradgetriebe zu ersetzen, wodurch die zuvor beschriebenen Probleme weitgehend gelöst werden sollen. Dabei bildet das Zahnradgetriebe eine vom Motor getrennte Antriebseinheit, welche zumindest zum Teil von einem eigenen Gehäuse umgeben ist. Zur Anpassung des Unterstzungsverhältnisses an unterschiedliche Fahrbedingungen kann zumindest ein Zahnrad gegensein anderes mit größerer/kleinerer Zähnezahl ersetzt werden. Zum Ausgleich der dadurch verursachten Durchmesserdifferenz ist der Motor verschiebbar auf einer Lagerplatte gelagert.

Bei diesem Getriebekonzept läßt sich die bei Zahnradgetrieben geforderte exakte Ausrichtung von zwei ineinandergreifenden Zahnrädern durch das vorgeschlagene variable Motorlagerkonzept nur schwer realisieren. Geringfügige Abweichungen können zu einer höheren Belastung, zu einem höheren Verschleiß sowie zu höheren Lärmemissionen führen.

Durch die getrennte Bauweise von Motor und Getriebe in Verbindung mit der variablen Motorlagerung kann eine vollständige Kapselung des Getriebes auf Schwierigkeiten stoßen; Schmierölleckagen lassen sich kaum vermeiden.

Aufgabe der vorliegenden Erfindung ist es, eine Kart-Antriebseinrichtung der eingangs angeführten Art mit einem kompakten Motor-Getriebe-Antriebskonzept vorzusehen, welches den Wartungsaufwand für den Nutzer minimiert.

Zur Lösung dieser Aufgabe sieht die Erfindung die Merkmale des Anspruchs 1 vor. Im Fall eines mehrstufigen Zahnradgetriebes sind dabei in der Folge fixe, unveränderbare Achsabstände zwischen den einzelnen Getriebestufen vorgesehen; das Antriebszahnrad der ersten Getriebestufe ist auf der Kurbel- bzw. Motorwelle angebracht, und das Abtriebszahnrad der letzten Getriebestufe ist auf der Hinterradantriebswelle angeordnet. Insgesamt ergibt sich dabei eine kompakte Antriebseinheit mit exakt ausgerichteten Getriebe-Zahnrädern in der Form eines "Direktantriebs" für die Hinterradantriebswelle des Karts. Um ein Austreten von Schmieröl zu verhindern, ist das gemeinsame Gehäuse vorzugsweise geschlossen ausgeführt.

Vorteilhafterweise ist das Antriebszahnrad des Getriebes (im Fall eines mehrstufigen Getriebes also der ersten Getriebestufe) drehbar auf der Kurbel- bzw. Motorwelle gelagert und über eine Kupplung, vorzugsweise eine Fliehkraftkupplung, mit der Kurbel- bzw. Motorwelle verbunden, wodurch das Motordrehmoment in effizienter Weise in das Getriebe eingeleitet wird. Für die Lagerung der Hinterradantriebswelle bieten sich zwei unterschiedliche Konzepte an:

Im ersten Fall kann die Hinterradantriebswelle unmittelbar im gemeinsamen Motor-Getriebe-Gehäuse drehbar gelagert sein. Das Abtriebszahnrad des Getriebes (bzw. der letzten Getriebestufe) ist bevorzugt mit der Hinterradantriebswelle über ein Verbindungselement, z.B. einer Schraube, lösbar verbunden, wobei das Verbindungselement über eine verschließbare Öffnung im Gehäuse zugänglich ist. Die Hinterradantriebswelle kann dreiteilig ausgeführt sein, wobei sie einen mittleren, im Gehäuse drehbar gelagert angeordneten Wellenteil und zwei weitere Wellenteile aufweist, welche an einem Ende mit dem mittleren Wellenteil lösbar, z.B. mittels Schraubverbindung, verbunden sind und an ihrem anderen Ende je ein Hinterrad tragen. Diese Teilung der Hinterradantriebswelle hat den Vorteil, dass im Fall eines Wellenbruchs nur der betroffene Teil der Antriebswelle ersetzt werden muss, wodurch sich der Aufwand an Zeit und Kosten für die Instandsetzung deutlich verringert.

Im zweiten Fall kann die Hinterradantriebswelle mittelbar - über das einstückig mit einer Hohlwelle ausgebildete Abtriebszahnrad des Getriebes (bzw. der letzten Getriebestufe) - im Gehäuse drehbar gelagert sein; die Hinterradantriebswelle ist dabei lösbar, z.B. mittels Passfeder, mit der Hohlwelle verbunden. Zur Dämpfung von Drehschwingungen und zum Schutz vor Lastspitzen können als Verbindungselemente auch eine elastische Kupplung, z.B. ein Gummielement, und/oder eine Rutschkupplung vorgesehen sein. Ganz allgemein ist es zur Vermeidung von Drehmomentspitzen im Antriebsstrang vorteilhaft, wenn im Antriebsstrang eine Überlastkupplung vorgesehen ist.

Die Befestigung des Motor-Getriebe-Gehäuses in einen Rohrrahmen, d.h. einem als Rohrverband ausgebildeten Fahrgestell, erfolgt beispielsweise mit mindestens einem Schraubklemmbügel an mindestens einem Rahmenrohr. Ein alternatives Montagekonzept ist dadurch gekennzeichnet, dass das Gehäuse den Zwischenraum zwischen zwei parallelen Rahmenrohren teilweise ausfüllt und mittels mindestens einer lösbaren Klemmverbindung, z.B. Schraubklemmverbindung oder Bandklemmverbindung, zwischen die beiden Rahmenrohre geklemmt ist. Das Gehäuseteil zwischen den beiden Rahmenrohren kann als zusätzliches Ölreservoir dienen.

Eine besonders kompakte Motor-Getriebekonstruktion erhält man dadurch, dass das Zahnradgetriebe zweistufig ausgebildet ist und das Abtriebszahnrad der ersten Getriebestufe sowie das Antriebszahnrad der zweiten Getriebestufe auf einer gemeinsamen Vorgelegewelle (Zwischenwelle) angeordnet sind. Dabei bietet es sich an, die erste Getriebestufe als Wechselgetriebe, d.h. die Zahnräder der ersten Getriebestufe als Wechselräder mit variablen Raddurchmessern zur Realisierung von verschiedenen Untersetzungsverhältnissen auszubilden. Der die Wechselräder umschließende Teil des Gehäuses ist zweckmäßigerweise als abnehmbarer Deckel ausgebildet.

Um das Untersetzungsverhältnis auch während der Fahrt variieren zu können, kann das Getriebe, insbesondere die zweite Getriebestufe bzw. allgemeiner die letzte Getriebestufe, auch als mehrgängiges Schaltgetriebe ausgeführt sein. Aus Sicherheitsgründen ist es hierbei weiters vorteilhaft, wenn dem Schaltgetriebe eine am Lenkrad angeordnete Schaltwippe zugeordnet ist, die mit einer Schaltstange des Schaltgetriebes über einen Seil- bzw. Bowdenzug verbunden ist.

Die beschriebene, favorisierte zweistufige Getriebeanordnung erlaubt außerdem die besonders platzsparende Integration eines Massenausgleiches, eines Startertriebes sowie einer Wasserpumpe, wobei
- auf der Vorgelegewelle ein als Zahnrad ausgebildetes Ausgleichsgewicht drehbar gelagert ist, welches von einem auf der Kurbelwelle angeordneten Zahnrad gleichen Durchmessers (Übersetzungsverhältnis 1:1) angetrieben wird,
- auf der Kurbel- bzw. Motorwelle ein Starterzahnrad angeordnet ist, welches von einem Starter über ein zwischengeschaltetes Startervorgelegegetriebe angetrieben wird, und/oder
- koaxial zur Vorgelegewelle eine Kühlwasserpumpe angeordnet ist, welche von der Vorgelegewelle angetrieben wird.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen:
Fig. 1 ein Kart in Draufsicht;
Fig. 2 eine Seitenansicht dieses Karts;
Fig. 3 eine Schnittdarstellung der gesamten Motor-Getriebeeinheit dieses Karts im Fall eines Hubkolbenmotors;
Fig. 3A eine Schnittdarstellung einer modifizierten Motor-Getriebeeinheit im Fall eines Wankelmotors;
Fig. 4 eine Schnittdarstellung der Motor-Getriebeeinheit gemäß der Schnittlinie A-A in Fig. 3 (Hubkolbenmotor);
Fig. 4A eine entsprechende Schnittdarstellung der Motor-Getriebeeinheit gemäß Schnittlinie A-A in Fig. 3A (Wankelmotor);
Fig. 5 einen Querschnitt durch eine Lagerung der Hinterradantriebswelle im Motor-Getriebe-Gehäuse mit elastischer Kupplung;
Fig. 6 einen Querschnitt durch eine Lagerung der Hinterradantriebswelle im Motor-Getriebe-Gehäuse mit Rutschkupplung;
Fig. 7 einen Querschnitt durch eine weitere Lagerung der Hinterradantriebswelle im Motor-Getriebe-Gehäuse gemäß einem unmittelbaren Lagerungskonzept;
Fig. 8 einen Querschnitt der Befestigung der Motor-Getriebeeinheit am Fahrzeugrahmen mittels Schraubklemmverbindung;
Fig. 9 einen Querschnitt der Befestigung der Motor-Getriebeeinheit am Fahrzeugrahmen mittels Bandklemmverbindung;
Fig. 10 einen Querschnitt durch die zweite Getriebestufe, welche als zweigängiges Schaltgetriebe ausgeführt ist;
Fig. 11 eine Darstellung mit einem Schnitt durch einen Teil eines solchen Schaltgetriebes, wie in Fig.10 gezeigt, sowie mit einer zur Schaltungsbetätigung vorgesehenen, schematisch im Schnitt veranschaulichten Lenkrad-Schaltwippe; und
Fig. 12 einen Schnitt durch ein mit einer Überlastkupplung versehenes Schaltgetriebe.

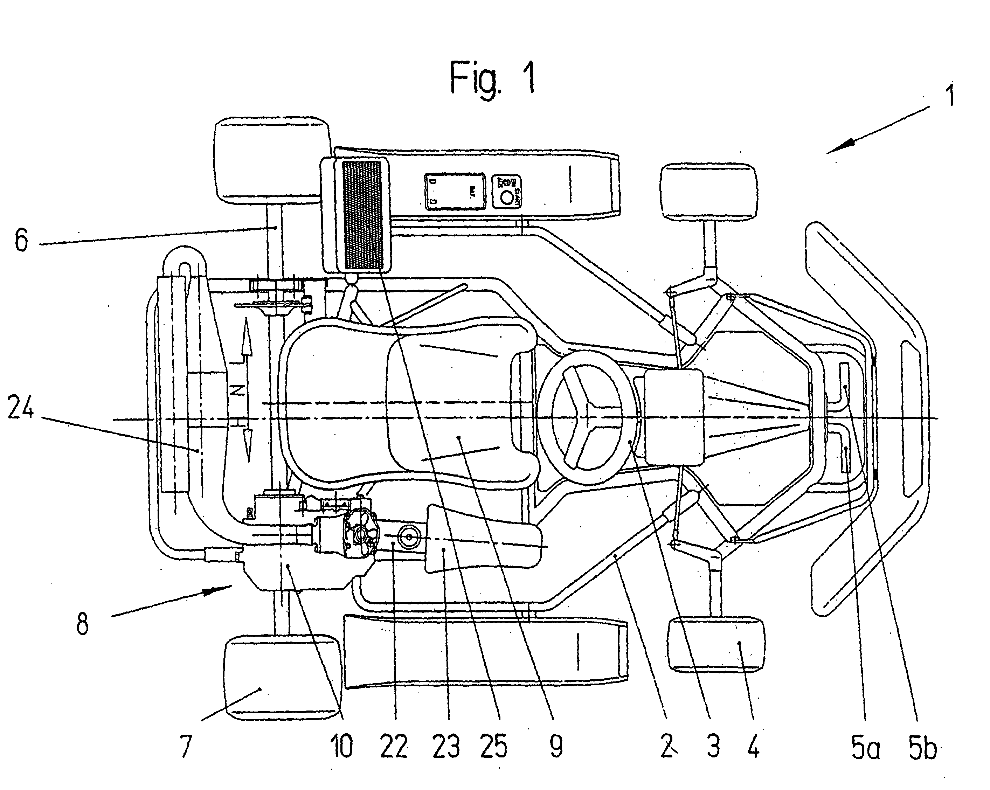

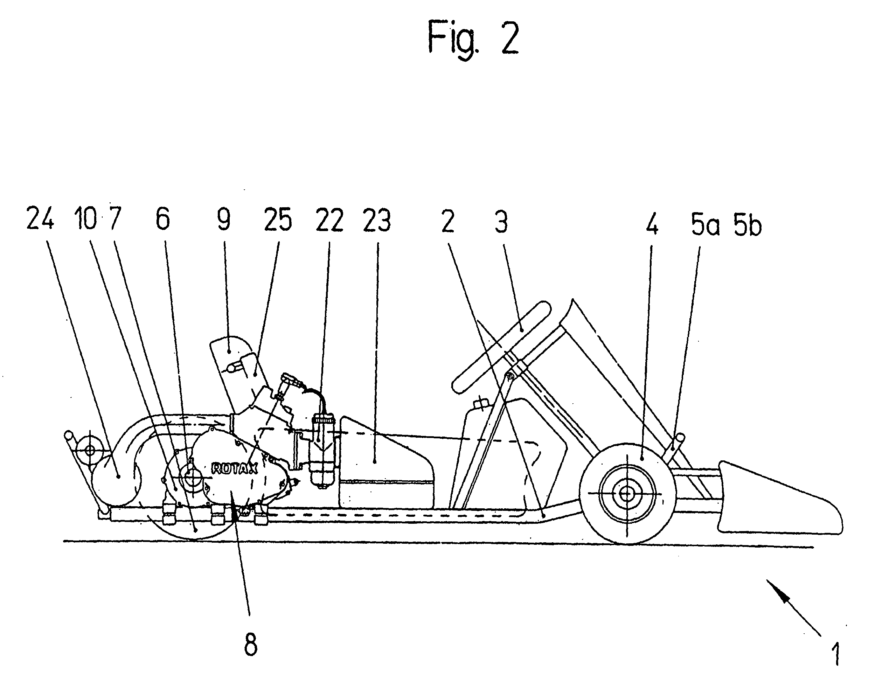

Die Figuren 1 und 2 zeigen ein unter der Bezeichnung "Kart" bekanntes Kraftfahrzeug 1 für Freizeit- und Sportzwecke. Es besitzt einen Rahmen 2 aus einem Rohrverband, nachstehend Rohrrahmen genannt, an dem im vorderen Bereich durch ein Lenkrad 3 lenkbare Vorderräder 4 gelagert sind. Im vorderen Bereich befinden sich außerdem Pedale 5a und 5b, üblicherweise ein Gaspedal und ein Bremspedal. Im rückwärtigen Bereich des Rohrrahmens 2 ist eine Hinterradantriebswelle 6 angeordnet, welche an ihren Enden Hinterräder 7 trägt und von einer Motor-Getriebeeinheit 8 angetrieben wird. Die Motor-Getriebeeinheit 8 ist vor der Hinterradantriebswelle 6 seitlich eines Fahrersitzes 9 angeordnet und am Rohrrahmen 2 befestigt. Die Hinterradantriebswelle 6 ist motorseitig in einem Motor-Getriebe-Gehäuse 10 gelagert und auf der gegenüberliegenden Seite am Rohrrahmen 2 gelagert. Grundsätzlich wäre auch ein zweimotoriger Antrieb denkbar (mit Motor-Getriebeeinheiten, die links und rechts vom Fahrersitz 9 angeordnet sind), wobei in diesem Fall die Lagerung der Hinterradantriebswelle 6 auf beiden Fahrzeugseiten in Motor-Getriebe-Gehäusen erfolgen würde.

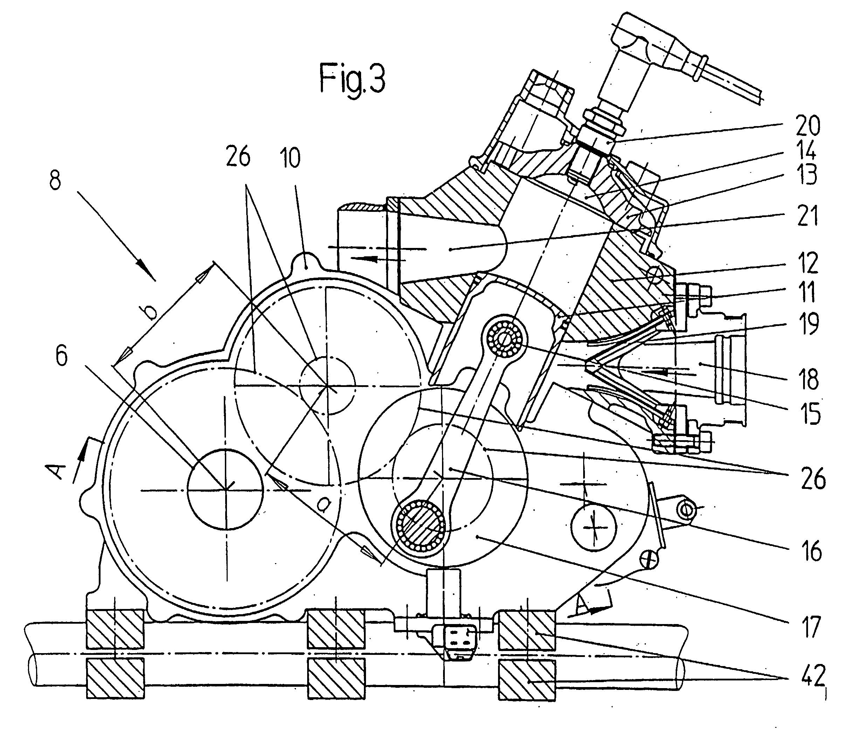

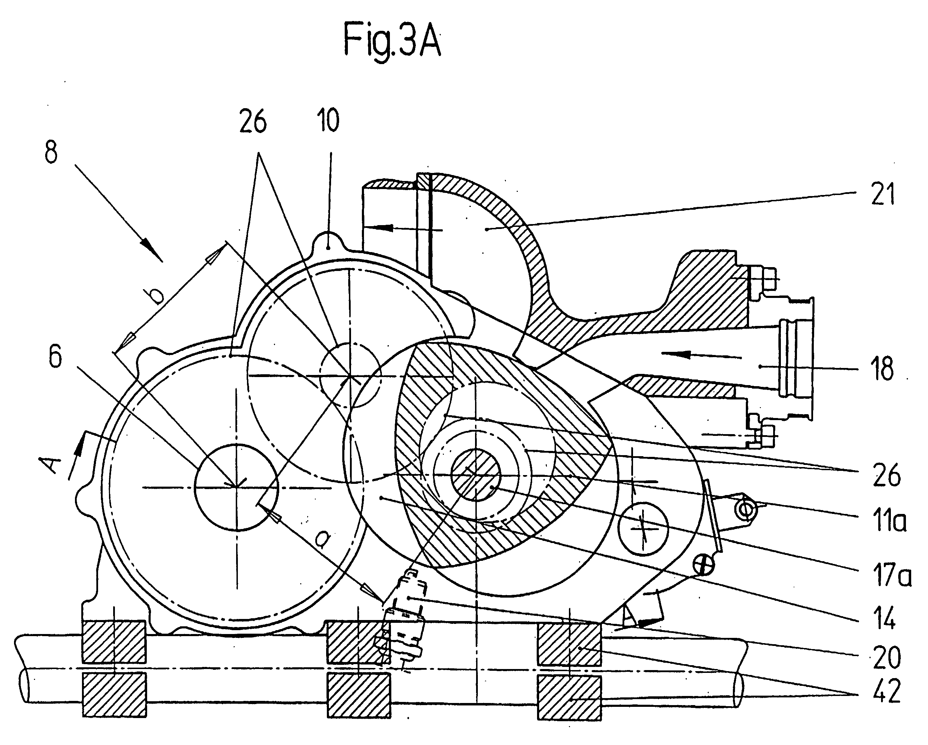

Die Motor-Getriebeeinheit 8 ist in Fig. 2 grob und in Fig. 3 detaillierter in einer Schnittdarstellung dargestellt. Daraus gehen die wesentlichen Komponenten einer Hubkolbenverbrennungskraftmaschine klar hervor, nämlich ein Kolben 11, welcher sich in einem Zylinder 12 hin- und herbewegt, ein Zylinderkopf 13, welcher den Zylinder 12 nach außen hin abschließt und dadurch einen Brennraum 14 bildet, sowie ein Kolbenbolzen 15 und ein Pleuel 16, um den Kolben 11 mit einer Kurbelwelle 17 zu verbinden und die oszillierende Bewegung des Kolbens 11 in eine rotierende Bewegung der Kurbelwelle 17 bzw. die Kolbenschubkraft in ein Motordrehmoment übersetzt.

Die Fig. 3 zeigt weiters ein Einlasssystem 18 - im konkreten Beispiel basierend auf einer Einlassmembran 19 - zur Befüllung des Brennraumes 14 mit einem Kraftstoff-Luft-Gemisch, eine Zündkerze 20 zur Entzündung des Kraftstoff-Luft-Gemisches, sowie einen Auslasskanal 21 für die Entleerung des Brennraumes 14 von den durch die Verbrennung entstandenen Abgasen.

In Fig. 1 und Fig. 2 sind außerdem noch einige wesentliche periphere Motorkomponenten eingezeichnet, nämlich ein an das Einlasssystem 18 angeschlossener Vergaser 22 samt Luftfilter 23 zur Aufbereitung des Kraftstoff-Luft-Gemisches, ein an den Auslasskanal 21 anschließender Auspuff 24 zur Dämpfung des Auspuffgeräusches sowie ein Wasserkühler 25 zur Kühlung des im Motorblock zirkulierenden Kühlwassers.

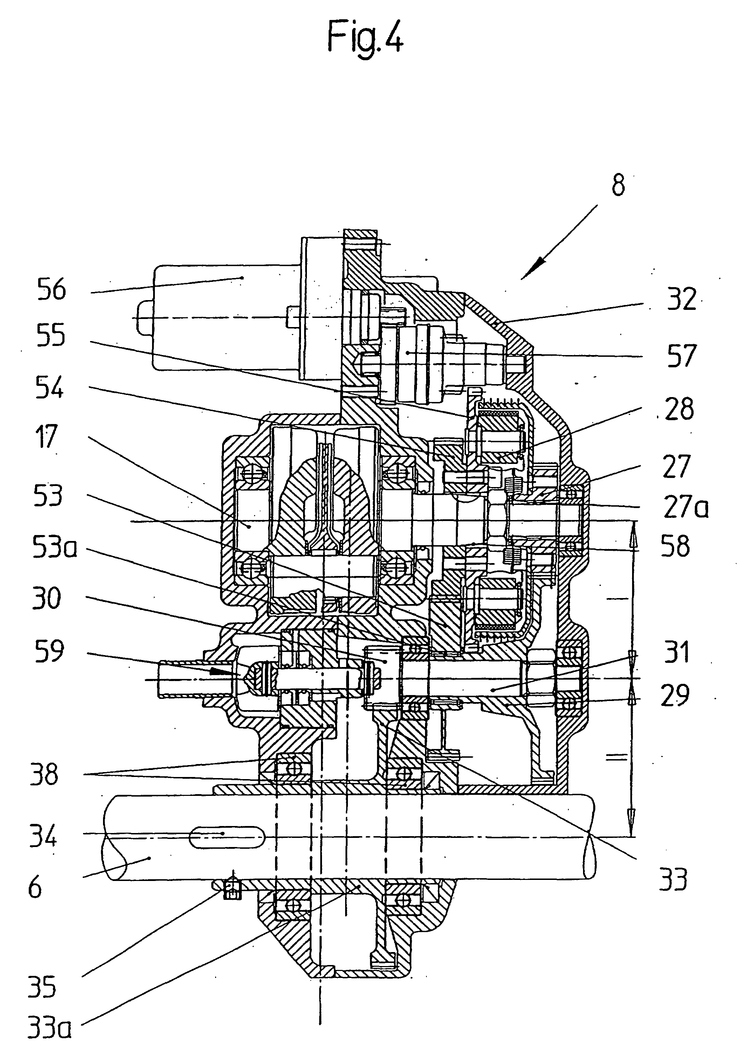

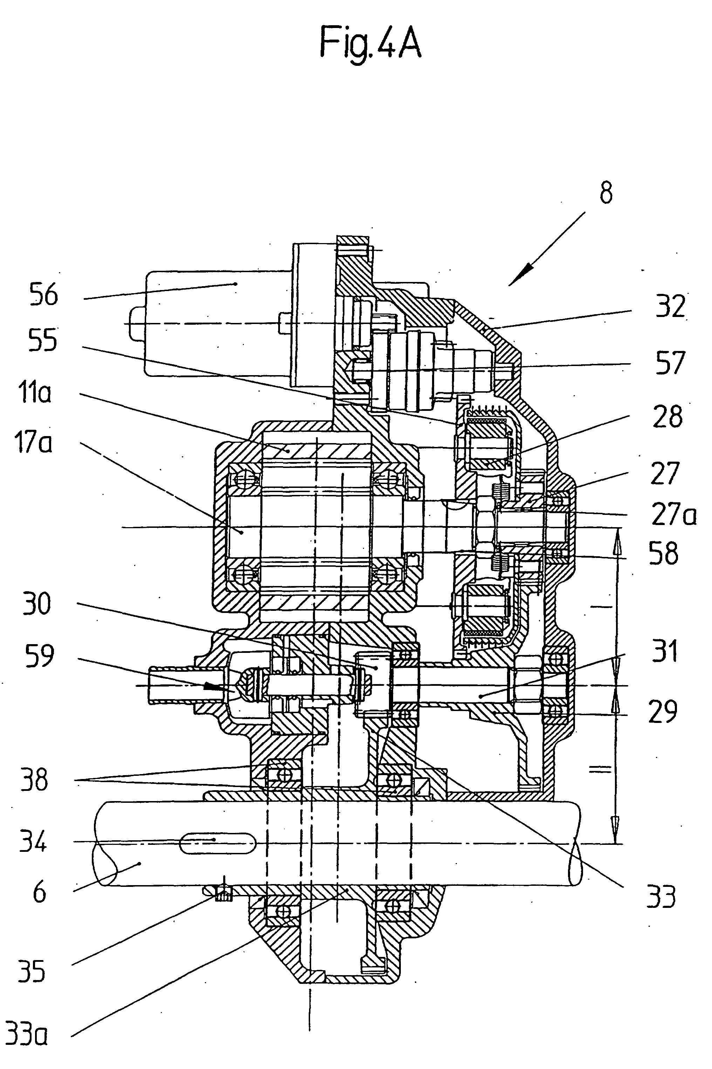

Der vorstehend beispielhaft beschriebene Hubkolbenmotor entspricht in seiner Bauart einer Zweitaktbrennkraftmaschine mit Membraneinlass, Vergasergemischbildung und Wasserkühlung. Selbstverständlich wäre auch jede andere Motorbauart anwendbar, solange sie auf dem Prinzip einer Verbrennungskraftmaschine basiert, z.B. Zweitaktbrennkraftmaschinen mit Kraftstoffeinspritzung, Viertaktbrennkraftmaschinen oder Drehkolbenmotoren (vgl. auch Fig. 3A und 4A).

In Fig. 3A ist beispielsweise eine Motor-Getriebeeinheit 8 auf Basis eines Drehkolbenmotors, im konkreten Fall eines Wankelmotors, dargestellt, wobei Motorkomponenten wie Wankelscheibe 11a, Motorwelle 17a, Brennraum 14, Zündkerze 20 sowie Ein- und Auslasskanal 18 bzw. 21 ersichtlich sind. Die Motorwelle 17a des Drehkolbenmotors dient zur Übertragung des Motordrehmoments und entspricht somit funktionell der Kurbelwelle 17 gemäß Fig. 3.

Die Übertragung des von der Kurbelwelle 17 bzw. Motorwelle 17a angebotenen Motordrehmoments auf die im Motor-Getriebe-Gehäuse 10 gelagerte Hinterradantriebswelle 6 erfolgt über ein Untersetzungs-Zahnradgetriebe 26, welches im konkreten Ausführungsbeispiel zweistufig ausgeführt ist und in Fig. 3 bzw. 3A durch die Teilkreise der einzelnen Getrieberäder dargestellt ist. Von Bedeutung ist, dass die Kurbel- bzw. Motorwelle 17, 17a und das Zahnradgetriebe 26 in dem gemeinsamen Motor-Getriebe-Gehäuse 10 untergebracht sind, und zwar mit fixen, unveränderbaren Achsabständen zwischen den einzelnen Getriebestufen (I, II in Fig. 4 und 4A). In Fig. 3 bzw. 3A sind diese fixen Achsabstände bei a bzw. b angedeutet. Das gemeinsame Motor-Getriebe-Gehäuse 10 ist vorzugsweise geschlossen ausgeführt, um ein Austreten von Schmieröl bzw. ein Eintreten von Schmutz zu verhindern.

Eine noch detailliertere Darstellung des Untersetzungs-Zahnradgetriebes 26 zeigen die Fig. 4 (Version mit Hubkolbenmotor) und Fig. 4A (Version mit Drehkolbenmotor), welche die Motor-Getriebeeinheit 8 gemäß der Schnittführung A-A (s. Fig. 3 bzw. 3A) zeigen. Darin ist ersichtlich, dass das Antriebszahnrad 27 des Getriebes 26, d.h. der ersten Getriebestufe I, drehbar - vorzugsweise mittels Nadellager 27a - auf der Kurbel- bzw. Motorwelle 17, 17a gelagert und über eine Kupplung 28, vorzugsweise eine Fliehkraftkupplung, mit dieser verbunden ist, wodurch das Motordrehmoment in die erste Getriebestufe I eingeleitet wird. Auf die Kupplung 28 könnte natürlich auch verzichtet werden, und das Antriebszahnrad 27 könnte direkt mit der Kurbel- bzw. Motorwelle 17, 17a verbunden werden, wodurch der Fahrkomfort allerdings erheblich vermindert würde.

Das Abtriebszahnrad 29 der ersten Getriebestufe I sowie das Antriebszahnrad 30 der zweiten Getriebestufe II sind in dem hier dargestellten bevorzugten Ausführungsbeispiel auf einer gemeinsamen Vorgelegewelle (Zwischenwelle) 31 angeordnet, welche im Motor-Getriebe-Gehäuse 10 drehbar gelagert ist. Dadurch kann auf kleinstem Raum ein besonders großes Untersetzungsverhältnis realisiert werden. Die ineinander greifenden Zahnräder 27 und 29 der ersten Getriebestufe I sind als Wechselräder ausgeführt, welche nach Abnahme des Gehäusedeckels 32 gegen eine Zahnradpaarung mit anderem Raddurchmesser ausgetauscht werden können. Dadurch ist es mit geringem Aufwand möglich, das Untersetzungsverhältnis des Getriebes 26 rasch den jeweiligen Einsatzbedingungen anzupassen.

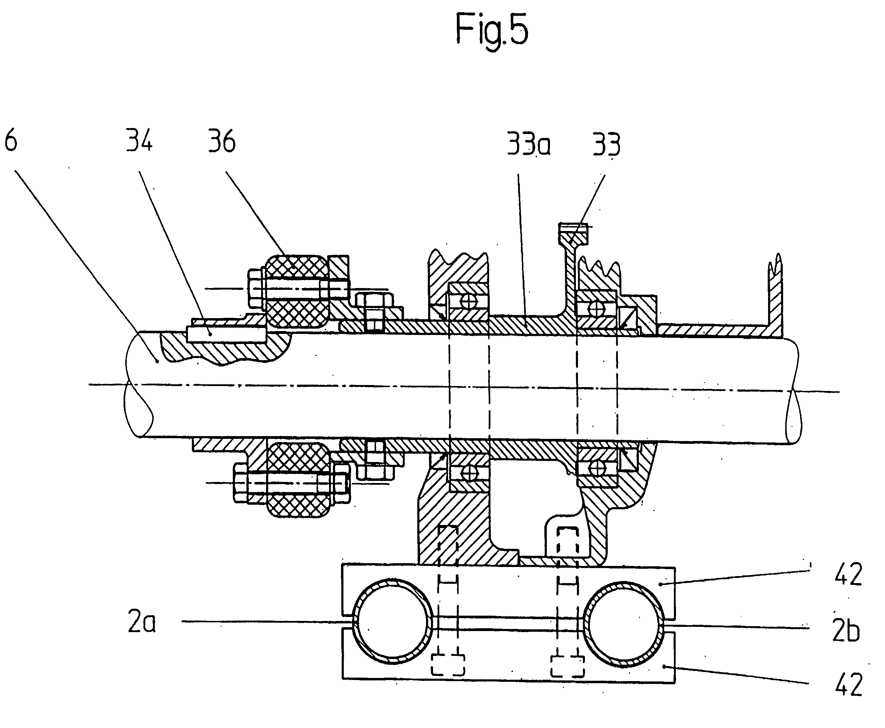

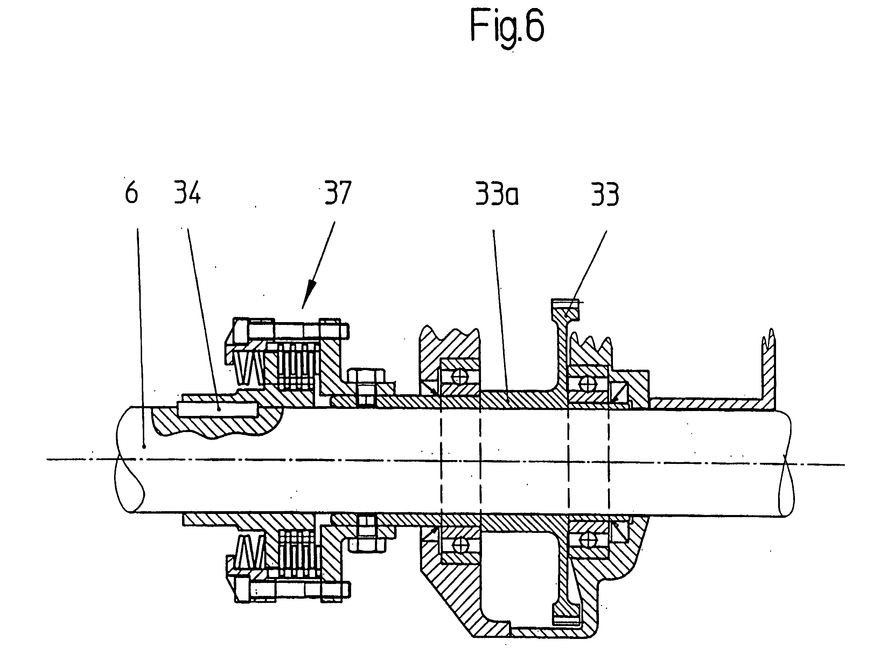

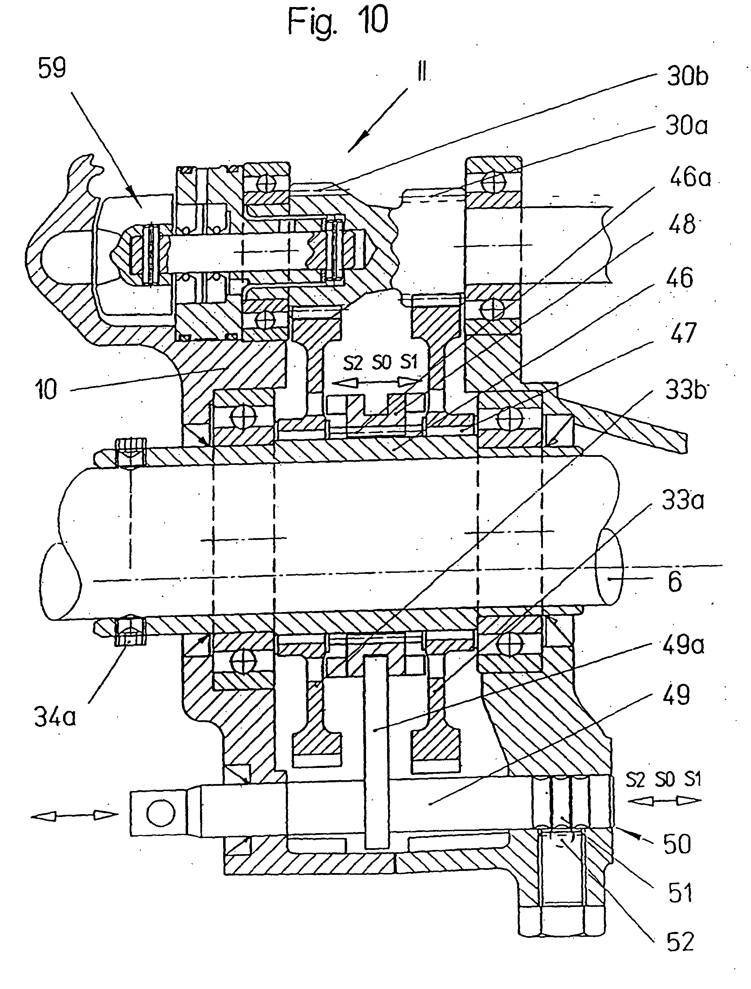

Das Abtriebszahnrad 33 der zweiten Getriebestufe II, welches sinngemäß in das Antriebszahnrad 30 der zweiten Getriebestufe eingreift, ist in einem Stück mit einer Hohlwelle 33a ausgebildet und lösbar - im vorliegenden Ausführungsbeispiel mittels Passfeder 34 - mit der Hinterradantriebswelle 6 verbunden. Eine Wurmschraube 35 sichert die Hinterradantriebswelle 6 gegen ein axiales Verrücken. Es sind selbstverständlich auch andere Verbindungselemente, wie z.B. eine Schraubverbindung 34a (vgl. Fig. 10), anwendbar. Alternativ kann auch eine elastische Kupplung 36 (Fig. 5) oder eine Rutschkupplung 37 (Fig. 6) als Verbindungselement zwischen der Hohlwelle 33a und der Hinterradantriebswelle 6 vorgesehen werden, wodurch ein zusätzlicher Schutz vor Lastspitzen und Drehschwingungen bewirkt wird.

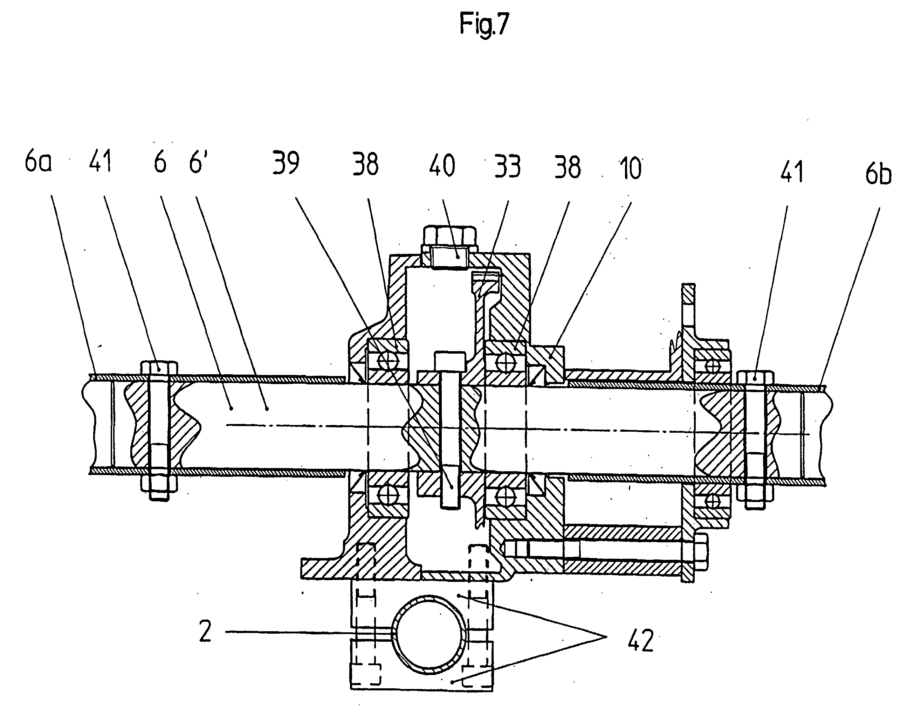

Die Lagerung der Hinterradantriebswelle 6 im Motor-Getriebe-Gehäuse 10 erfolgt mittelbar über die Hohlwelle 33a und Wälzlager 38. Es besteht jedoch auch die Möglichkeit, die Hinterradantriebswelle 6 direkt, d.h. unmittelbar über die Wälzlager 38, im Gehäuse 10 zu lagern. Diese Lagerungsvariante ist in Fig. 7 dargestellt. Das Abtriebszahnrad 33 braucht dabei nicht mit einer Hohlwelle ausgebildet zu sein. Die Befestigung des Abtriebszahnrades 33 an der Hinterradantriebswelle 6 erfolgt mittels einer Schraube 39, welche über eine verschließbare Öffnung 40 im Motor-Getriebe-Gehäuse 10 zugänglich ist. Selbstverständlich können anstatt der Schraube 39 auch andere lösbare Verbindungselemente vorgesehen werden; selbst eine unlösbare Verbindung wäre denkbar, wenngleich diese Anordnung den Nachteil hat, dass im Fall eines erforderlichen Austausches der Hinterradantriebswelle 6 das Motor-Getriebe-Gehäuse 10 zerlegt werden müsste.

Fig. 7 zeigt außerdem eine Ausführungsvariante, bei der die Hinterradantriebswelle 6 dreigeteilt ist, mit einem mittleren, im Motor-Getriebe-Gehäuse 10 drehbar gelagerten Wellenteil 6' und zwei weiteren Wellenteilen 6a und 6b, welche an einem Ende mit dem mittleren Wellenteil 6' lösbar - im gezeigten Beispiel mittels Schraubverbindung 41 - verbunden sind und an ihrem anderen Ende die Hinterräder 7 tragen. Diese Teilung der Hinterradantriebswelle 6 hat den Vorteil, dass im Fall eines Wellenbruchs nur der betroffene Teil der Antriebswelle 6 ersetzt werden muss, wodurch sich der Aufwand (Zeit, Kosten) für die Instandsetzung deutlich verringert.

Die Befestigung der Motor-Getriebeeinheit 8 bzw. des Motor-Getriebe-Gehäuses 10 im als Rohrverband ausgebildeten Rahmen 2 erfolgt mittels Schraubklemmbügel 42, s. Fig. 3 und 3A sowie Fig. 5 und 7. Im Ausführungsbeispiel nach Fig. 3 kommen drei Schraubklemmbügel 42 zum Einsatz. Theoretisch würde schon ein Schraubklemmbügel 42 ausreichen; diese Minimallösung wäre allerdings mit einer hohen mechanischen Belastung im Bereich des Schraubklemmbügels 42 verbunden und böte außerdem nur einen unsicheren Halt. Die Schraubklemmbügel 42 können so ausgebildet sein, dass sie an einem Rahmenrohr des Rohrrahmens 2 (Fig. 7) oder an zwei parallelen Rahmenrohren 2a, 2b (Fig. 5) befestigt werden können. Die Befestigungsvariante über zwei parallele Rahmenrohre 2a, 2b ist zwar strenggenommen statisch unbestimmt, bietet aber im Gegensatz zur erstgenannten Variante auch bei demontierter Hinterradantriebswelle 6 einen sicheren Halt. (In Fig. 5 und Fig. 7 sind die Schraubklemmbügel 42 der einfacheren Darstellbarkeit halber 90° um die Hinterradantriebswelle 6 gedreht eingezeichnet)

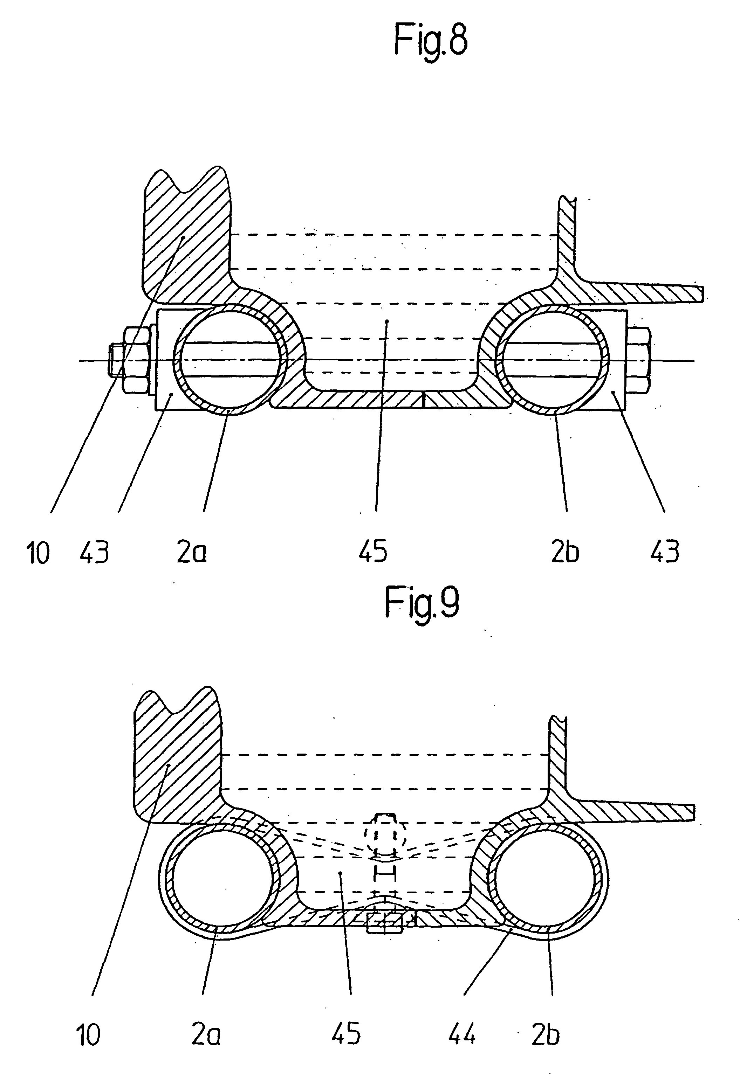

Ein alternatives Montagekonzept zeigen die Fig. 8 und Fig. 9. Danach füllt das Motor-Getriebe-Gehäuse 10 den Zwischenraum zwischen zwei parallelen Rahmenrohren 2a, 2b teilweise aus und wird mittels einer Schraubklemmverbindung 43 (Fig. 8) oder Bandklemmverbindung 44 (Fig. 9) zwischen die beiden Rahmenrohre 2a und 2b geklemmt. Als Vorteil dieser Montagevariante ist zu werten, dass erstens auf der Fahrzeugunterseite keine Befestigungsteile hervorragen, welche die Bodenfreiheit vermindern würden, und zweitens das zusätzlich gewonnene Gehäusevolumen zwischen den Rahmenrohren 2a, 2b als zusätzliches Ölreservoir 45 (Ölwanne) genutzt werden kann.

Um das Untersetzungsverhältnis auch während der Fahrt variieren zu können, kann die zweite Getriebestufe II auch als mehrgängiges Schaltgetriebe ausgeführt sein. In Fig. 10 ist beispielhaft ein zweigängiges Schaltgetriebe dargestellt. Die zweite Getriebestufe II enthält demnach zwei Zahnradpaarungen 30a/33a und 30b/33b mit unterschiedlichen Durchmesserverhältnissen. Die Lagerung der Hinterradantriebswelle 6 erfolgt wieder mittelbar über eine Hohlwelle 46, welche jedoch hier ein von den Abtriebszahnrädern 33a, 33b materiell getrenntes, eigenes Teil bildet. Die Abtriebszahnräder 33a, 33b sind auf der Hohlwelle 46 vorzugweise über Nadellager 47 drehbar gelagert. Da die mechanische Beanspruchung in den Lagerstellen relativ gering ist, kann auf die Nadellager 47 auch verzichtet werden. Zwischen den Abtriebszahnrädern 33a, 33b befinden sich eine Schaltmuffe 48, welche auf der Hohlwelle 46 über eine Verzahnung 46a axial verschiebbar gelagert ist und durch eine von außen über eine Schaltstange 49 (s. Doppelpfeil, Fig. 10, mit den Schaltstellungen S0, S1 und S2) verstellbare Schaltgabel 49a verschoben werden kann. Im gezeigten Beispiel sind drei Stellungen möglich:
- In der Neutralstellung S0 befindet sich die Schaltmuffe 48 genau in der Mitte zwischen den Abtriebszahnrädern 33a und 33b; es besteht keine kraftschlüssige Verbindung zwischen den Abtriebszahnrädern 33a, 33b und der Hinterradantriebswelle 6; d.h. es erfolgt keine Kraftübertragung.
- Im 1. Gang (Schaltstellung S1) wird die Schaltmuffe 48 durch die Schaltgabel 49a gegen das Abtriebszahnrad 33a gerückt, sie rastet in dieses ein und stellt dadurch eine kraftschlüssige Verbindung zur Hohlwelle 46 bzw. zur Hinterradantriebswelle 6 her.
- Im 2. Gang (Schaltstellung S2) wird die Schaltmuffe 48 durch die Schaltgabel 49a gegen das Abtriebszahnrad 33b gerückt, sie rastet in dieses ein und stellt dadurch eine kraftschlüssige Verbindung zur Hohlwelle 46 bzw. zur Hinterradantriebswelle 6 her. Das Untersetzungsverhältnis ist etwas kleiner wie im 1. Gang.

Kennzeichnend ist, dass die Zahnradpaare 30a/33a und 30b/33b des Schaltgetriebes ständig ineinander greifen - unabhängig von der Schaltmuffenstellung.

Die drei verschiedenen Schaltmuffenstellungen S0, S1 und S2 werden durch eine sogenannte Indexierung 50 exakt definiert. Die Indexierung 50 befindet sich auf der Schaltstange 49 der Schaltgabel 49 und besteht aus drei nebeneinander angeordneten Rillen 51 und einer zugeordneten Kugel 52 mit zugehörigem Gewindestift 52' (s. Fig. wobei die Kugel 52 abhängig von der gewählten Schaltmuffenstellung in die korrespondierende Indexrille S0, S1 oder S2 einrastet.

Die beschriebene zweistufige Motor-Getriebeanordnung mit Vorgelegewelle 31 erlaubt außerdem die besonders platzsparende Integration weiterer Motorkomponenten; so kann ein Massenausgleich (im Fall eines Hubkolbenmotors) auf sehr einfache Weise eingegliedert werden, indem auf der Vorgelegewelle 31 ein als Zahnrad ausgebildetes Ausgleichsgewicht 53 drehbar, z.B. mittels Nadellager 53a, angeordnet wird, welches von einem auf der Kurbelwelle 17 angeordneten Zahnrad 54 gleichen Durchmessers (Übersetzungsverhältnis 1:1) angetrieben wird, s. Fig. 4. Bei der Version mit Drehkolbenmotor kann auf diesen Massenausgleich verzichtet werden, da keine oszillierenden Massenkräfte auftreten.

Die Kurbel- bzw. Motorwelle 17, 17a bietet darüber hinaus auch noch genügend Platz für ein Starterzahnrad 55, welches von einem Starter 56 über ein zwischengeschaltetes Startervorgelegegetriebe 57 angetrieben wird (vgl. Fig. 4 und 4A). Das Starterzahnrad 55, das Antriebszahnrad 54 für den Massenausgleich und die Kupplung 28 können miteinander verbunden sein und solcherart vorteilhafterweise über einen Kegelsitz 58 auf der Kurbelwelle 17 befestigt werden. Hierdurch wird eine besonders schnelle Montage/Demontage ermöglicht.

Nach Fig. 4 bzw. 4A kann schließlich noch eine Kühlwasserpumpe 59 äußerst platzsparend im gemeinsamen Motor-Getriebe-Gehäuse 10 untergebracht werden, indem diese koaxial zur Vorgelegewelle 31 angeordnet und von der Vorgelegewelle 31 angetrieben wird, vgl. auch Fig. 10.

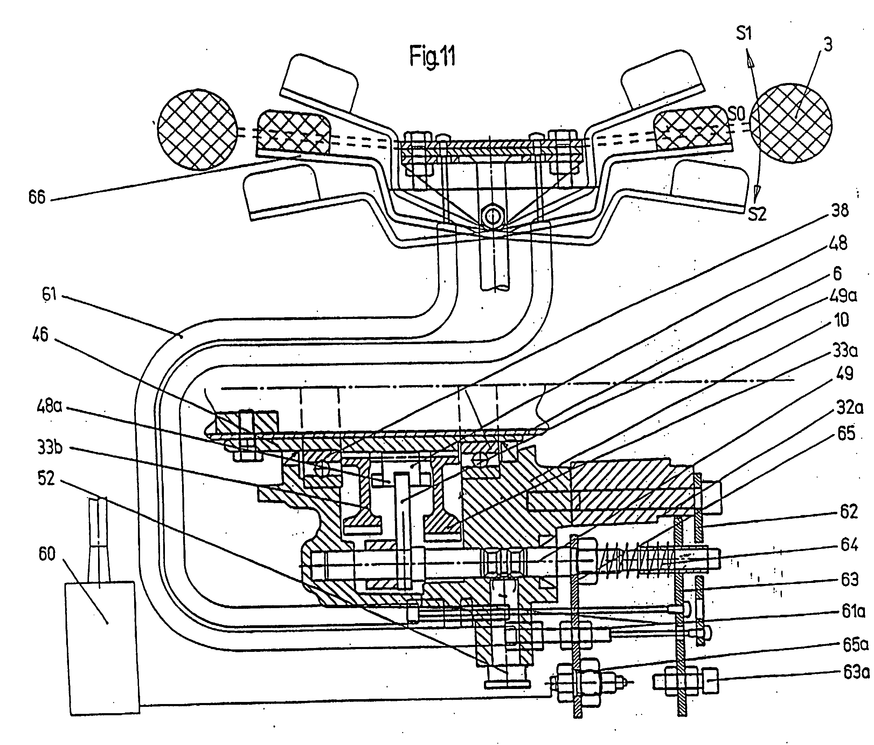

In Fig. 11 ist ausgehend von dem zweigängigen Schaltgetriebe gemäß Fig. 10 eine Ausführung gezeigt, bei der beim Schalten vom 1. Gang (Stellung S1) in den 2. Gang (Stellung S2) kurzzeitig die in Fig.11 schematisch bei 60 gezeigte Zündung unterbrochen wird. Durch eine solche kurzfristige Zündungsunterbrechung können die Klauen 48a der Schaltmuffe 48 entlastet und leichter mit den zugehörigen Ausnehmungen im Abtriebszahnrad 33 in Eingriff gebracht werden, wenn sich die Schaltstange 49 wie vorhin an Hand der Fig. 10 erläutert nach links bewegt (Stellung S2).

Zur Betätigung der Schaltstange 49 dienen Seil- bzw. Bowdenzüge 61, die an Hebeln 62 bzw. 63 befestigt sind. Im Einzelnen wird beim Schalten vom 1. Gang (Stellung S1) in den 2. Gang (Stellung S2) der Hebel 63 gemäß der Darstellung in Fig.11 nach links bewegt, wobei eine der Schaltstange 49 zugeordnete Feder 64 vorgespannt wird. Zur Zündungsunterbrechung ist eine Kontaktschraube 65a auf einer mit der Schaltstange 49 verbundenen Platte 65 vorgesehen, die im Laufe des Schaltens mit einer Einstellschraube 63a auf dem Hebel 63 - bei dessen Bewegung nach links, knapp bevor er an einem Anschlag 32a zur Anlage kommt - in Kontakt gelangt; dadurch wird die Kontaktschraube 65a auf Masse gelegt und die Zündung 60 unterbrochen. Diese Unterbrechung dauert aber nur kurze Zeit, da sich die Platte 65 dann beim Schalten weiter nach links bewegt, wodurch sich die Kontaktschraube 65a wieder von der Einstellschraube 63 löst.

Aus Sicherheitsgründen sollten auch während des Schaltvorganges beide Hände am Lenkrad 3 bleiben. Um dies zu gewährleisten, wird eine bevorzugte Schaltungsbetätigung mittels einer am Lenkrad 3 angeordneten Schaltwippe 66 vorgeschlagen, welche über die Seilzüge oder Bowdenzüge 61 mit der Schaltstange 49 verbunden ist. Durch die axiale Bewegung der Schaltstange 49 können die jeweiligen Zahnräder 33a, 33b für den 1. bzw. 2. Gang mittels der Schaltgabel 49a und der Schaltmuffe 48 wahlweise mit der Hohlwelle 46 bzw. Hinterradantriebswelle 6 kraftschlüssig verbunden werden.

Bei einer Betätigung der Schaltwippe 66, um unter Last vom 1. in den 2. Gang zu schalten, wird die Schaltwippe 66 in die Position S2 gedrückt. Der Seilzug 61 spannt damit über den Hebel 63 die Feder 64 vor. Diese Feder 64 drückt auf die Schaltstange 49. Sobald die Einstellschraube 63a die Kontaktschraube 65a berührt, wird die Zündung 60 und somit der Kraftfluss über die Schaltmuffe 48 unterbrochen. In diesem Moment drückt die vorgespannte Feder 64 die Schaltstange 49 in den 2. Gang. Damit ist der Abschaltkontakt (Kontaktschraube 65a) wieder offen, da der Hebel 63 am gehäusefesten Anschlag 32a anliegt, so dass die Zündung 60 wirklich nur für die allernötigste Zeit unterbrochen wird.

Besonders in der Ausführung mit einem mehrgängigen Schaltgetriebe erweist es sich als vorteilhaft, im Antriebsstrang eine Überlastkupplung vorzusehen. Während des Schaltmanövers bleibt die Fliehkraftkupplung 28 (s. Fig.4) üblicherweise eingekuppelt - es wird nämlich üblicherweise bei höheren Drehzahlen geschaltet. Durch die plötzliche, sprunghafte Drehzahländerung während des Gangwechsels treten im Antriebsstrang Drehmomentspitzen auf, welche die gesamte Mechanik strapazieren und außerdem das Fahrverhalten - namentlich die Bodenhaftung - beträchtlich verschlechtern. Die Überlastkupplung kann, wie in Fig.5 und 6 bereits gezeigt wurde, als elastische Kupplung 36 oder als Rutschkupplung 37 ausgeführt sein und an der Hinterradantriebswelle 6 außerhalb des Motor-Getriebe-Gehäuses 10 angeordnet sein. Die Überlastkupplung kann aber grundsätzlich auch innerhalb des Motor-Getriebe-Gehäuses 10 untergebracht werden, beispielsweise indem sie das Abtriebszahnrad 33 und die Hohlwelle 33a miteinander verbindet - vorausgesetzt das Abtriebszahnrad 33 und die Hohlwelle 33a stellen zwei voneinander getrennte Elemente dar (nicht dargestellt).

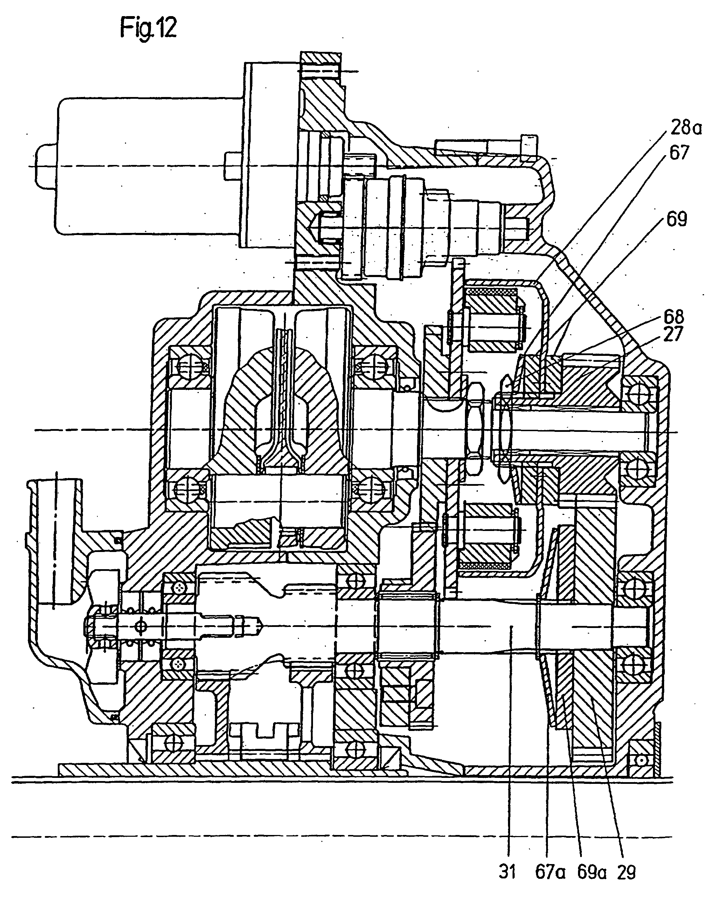

Als weitere Möglichkeit kann die Überlastkupplung zwischen der Vorgelegewelle 31 und dem Abtriebszahnrad 29 der ersten Getriebestufe I angeordnet werden. Diese Variante ist in Fig.12 dargestellt. Die Überlastkupplung ist exemplarisch als Rutschkupplung ausgeführt, bestehend aus mindestens einer Reibscheibe 69a und einer Tellerfeder 67a, welche die Reibscheibe 69a gegen das Abtriebszahnrad 29 drückt und auf diese Weise die Drehmomentübertragung ermöglicht. Lastspitzen werden durch das Durchrutschen der Reibscheibe 69a kompensiert.

Besonders vorteilhaft erweist es sich, die Rutschkupplung zwischen der Fliehkraftkupplung 28 und dem Antriebszahnrad 27 der ersten Getriebestufe I anzuordnen, da das zu übertragende Drehmoment hier am kleinsten ist und folglich die Rutschkupplung vergleichsweise klein und damit platzsparend ausgeführt werden kann. Fig. 12 zeigt beispielhaft zusätzlich eine Ausführung, in der die Kupplungsglocke 28a der Fliehkraftkupplung 28 zwischen zwei Reibscheiben 69 mittels einer Tellerfeder 67 und einer Vorspannmutter 68 eingeklemmt ist und dadurch nur einen begrenzten Kraftschluss zum Antriebsrad 27 erlaubt.

## Patentansprüche

1. Kart-Antriebseinrichtung mit einem Verbrennungsmotor in Form eines Hubkolben- oder Drehkolbenmotors als Antriebsquelle und mit einem Untersetzungs-Zahnradgetriebe (26) zwischen dem Verbrennungsmotor und einer Kart-Hinterradantriebswelle (6), wobei das Antriebszahnrad (27) des Getriebes (26) auf der Kurbelwelle (17) bzw. Motorwelle (17a) und das Abtriebszahnrad (33) des Getriebes (26) auf der Hinterradantriebswelle (6) angeordnet sind, **dadurch gekennzeichnet, dass** das Zahnradgetriebe (26) mit der Kurbelwelle (17) des Hubkolbenmotors bzw. mit der Motorwelle (17a) des Drehkolbenmotors in einem gemeinsamen Gehäuse (10) untergebracht ist, und dass der oder die Achsabstände (a, b) der Getriebe-Zahnräder (27, 29; 30, 33) im Gehäuse (10) unveränderbar festgelegt sind.

2. Antriebseinrichtung nach Anspruch 1, **dadurch gekennzeichnet, dass** das gemeinsame Gehäuse (10) geschlossen ausgeführt ist.

3. Antriebseinrichtung nach Anspruch 1 oder 2, **dadurch gekennzeichnet, dass** das Antriebszahnrad (27) des Getriebes (26) drehbar auf der Kurbel- bzw. Motorwelle (17 bzw. 17a) gelagert und über eine Kupplung (28) mit der Kurbel- bzw. Motorwelle (17 bzw. 17a) verbunden ist.

4. Antriebseinrichtung nach Anspruch 3, **dadurch gekennzeichnet, dass** die Kupplung (28) eine Fliehkraftkupplung ist.

5. Antriebseinrichtung nach einem der Ansprüche 1 bis 4, **dadurch gekennzeichnet, dass** die Hinterradantriebswelle (6) im gemeinsamen Gehäuse (10) drehbar gelagert ist.

6. Antriebseinrichtung nach Anspruch 5, **dadurch gekennzeichnet, dass** das Abtriebszahnrad (33) des Getriebes (26) mit der Hinterradantriebswelle (6) über ein Verbindungselement, z.B. eine Schraube (39), lösbar verbunden ist, wobei das Verbindungselement über eine verschließbare Öffnung (40) im Gehäuse (10) zugänglich ist.

7. Antriebseinrichtung nach Anspruch 5 oder 6, **dadurch gekennzeichnet, dass** die Hinterradantriebswelle (6) dreiteilig ausgeführt ist, wobei sie einen mittleren, im Gehäuse drehbar gelagert angeordneten Wellenteil (6') und zwei weitere Wellenteile (6a, 6b) aufweist, welche an einem Ende mit dem mittleren Wellenteil (6') lösbar, z.B. mittels Schraubverbindung (41), verbunden sind und an ihrem anderen Ende je ein Hinterrad (7) tragen.

8. Antriebseinrichtung nach einem der Ansprüche 1 bis 4, **dadurch gekennzeichnet, dass** das Abtriebszahnrad (33) des Getriebes einstückig mit einer Hohlwelle (33a) ausgebildet ist, welche im Gehäuse (10) drehbar gelagert und mit der Hinterradantriebswelle (6) lösbar, z.B. mittels Passfeder (34), verbunden ist.

9. Antriebseinrichtung nach einem der Ansprüche 1 bis 8, **dadurch gekennzeichnet, dass** im Antriebsstrang eine Überlastkupplung (67, 68, 69) vorgesehen ist.

10. Antriebseinrichtung nach Anspruch 8 oder 9, **dadurch gekennzeichnet, dass** die Hohlwelle (33) über eine elastische Kupplung (36), z.B. ein Gummielement, und/oder über eine Rutschkupplung (37) mit der Hinterradantriebswelle (6) verbunden ist.

11. Antriebseinrichtung nach einem der Ansprüche 1 bis 10, **dadurch gekennzeichnet, dass** das Getriebe (26) als mehrgängiges Schaltgetriebe ausgeführt ist.

12. Antriebseinrichtung nach Anspruch 11, **dadurch gekennzeichnet, dass** im Fall eines mehrstufigen Getriebes (26) die letzte Getriebestufe (II) als Schaltgetriebe ausgeführt ist.

13. Antriebseinrichtung nach Anspruch 11 oder 12, **dadurch gekennzeichnet, dass** dem Schaltgetriebe (26) eine am Lenkrad (3) angeordnete Schaltwippe (66) zugeordnet ist, die mit einer Schaltstange (49) des Schaltgetriebes (26) über einen Seil- bzw. Bowdenzug (61) verbunden ist.

14. Antriebseinrichtung nach einem der Ansprüche 1 bis 13, **dadurch gekennzeichnet, dass** ein Rohrrahmen (2) als Fahrgestell vorgesehen ist, und das Gehäuse (10) mit mindestens einem Schraubklemmbügel (42) an mindestens einem Rahmenrohr (2a, 2b) befestigt ist.

15. Antriebseinrichtung nach einem der Ansprüche 1 bis 13, **dadurch gekennzeichnet, dass** ein Rohrrahmen (2) als Fahrgestell vorgesehen ist, und dass das Gehäuse (10) den Zwischenraum zwischen zwei parallelen Rahmenrohren (2a, 2b) teilweise ausfüllt und mittels mindestens einer lösbaren Klemmverbindung, z.B. Schraubklemmverbindung (43) oder Bandklemmverbindung (44), zwischen die beiden Rahmenrohre (2a, 2b) geklemmt ist.

16. Antriebseinrichtung nach einem der Ansprüche 1 bis 15, **dadurch gekennzeichnet, dass** das Zahnradgetriebe (26) zweistufig ausgebildet ist und das Abtriebszahnrad (29) der ersten Getriebestufe (I) sowie das Antriebszahnrad (30) der zweiten Getriebestufe (II) auf einer gemeinsamen Vorgelege- bzw. Zwischenwelle (31) angeordnet sind.

17. Antriebseinrichtung nach Anspruch 16, **dadurch gekennzeichnet, dass** die Zahnräder (27, 29) der ersten Getriebestufe (I) als Wechselräder mit variablen Raddurchmessern zur Realisierung von verschiedenen Untersetzungsverhältnissen ausgebildet sind.

18. Antriebseinrichtung nach Anspruch 17, **dadurch gekennzeichnet, dass** der die Wechselräder umschließende Teil des Gehäuses (10) als abnehmbarer Deckel (32) ausgebildet ist.

19. Antriebseinrichtung nach einem der Ansprüche 16 bis 18, **dadurch gekennzeichnet, dass** auf der Vorgelegewelle (31) ein als Zahnrad ausgebildetes Ausgleichsgewicht (53) drehbar gelagert ist, welches von einem auf der Kurbelwelle (17) angeordneten Zahnrad (54) gleichen Durchmessers angetrieben wird.

20. Antriebseinrichtung nach einem der Ansprüche 16 bis 19, **dadurch gekennzeichnet, dass** auf der Kurbel- bzw. Motorwelle (17, 17a) ein Starterzahnrad (55) angeordnet ist, welches von einem Starter (56) über ein zwischengeschaltetes Startervorgelegegetriebe (57) angetrieben wird.

21. Antriebseinrichtung nach einem der Ansprüche 16 bis 20, **dadurch gekennzeichnet, dass** koaxial zur Vorgelegewelle (31) eine Kühlwasserpumpe (59) angeordnet ist, welche von der Vorgelegewelle (31) angetrieben wird.

22. Kart-Fahrzeug mit einer Antriebseinrichtung nach einem der Ansprüche 1 bis 21.

## Claims

1. A kart driving mechanism with an internal combustion engine in the form of a reciprocating piston or rotary piston engine that serves as the power source, and with a reduction gear transmission (26) between the internal combustion engine and a kart rear wheel drive shaft (6), wherein the driving gear (27) of the transmission (26) is arranged on the crankshaft (17) or the engine shaft (17a) and the driven gear (33) of the transmission (26) is arranged on the rear wheel drive shaft (6), **characterized in that** the gear transmission (26) and the crankshaft (17) of the reciprocating piston engine or the engine shaft (17a) of the rotary piston engine are respectively arranged in a common housing (10), and **in that** the center distance(s) of axes (a, b) of the transmission gears (27, 29; 30, 33) are invariably fixed in the housing (10).

2. The driving mechanism according to Claim 1, **characterized in that** the common housing (10) is closed.

3. The driving mechanism according to Claim 1 or 2, **characterized in that** the driving gear (27) of the transmission (26) is rotatably supported on the crankshaft or the engine shaft (17 or 17a) and connected to the crankshaft or the engine shaft (17 or 17a) by means of a clutch (28).

4. The driving mechanism according to Claim 3, **characterized in that** the clutch (28) consists of a centrifugal clutch.

5. The driving mechanism according to one of Claims 1-4, **characterized in that** the rear wheel drive shaft (6) is rotatably supported in the common housing (10).

6. The driving mechanism according to Claim 5, **characterized in that** the driven gear (33) of the transmission (26) is detachably connected to the rear wheel drive shaft (6) by means of a connecting element, e.g., a screw (39), wherein the connecting element is accessible through an opening (40) in the housing (10) that can be closed.

7. The driving mechanism according to Claim 5 or 6, **characterized in that** the rear wheel drive shaft (6) consists of three parts, namely a central shaft section (6') that is rotatably supported in the housing and two other shaft sections (6a, 6b) that are detachably connected to the central shaft section (6') on one end, e.g., by means of a screw connection (41), and respectively carry a rear wheel (7) on the other end.

8. The driving mechanism according to one of Claims 1-4, **characterized in that** the driven gear (33) of the transmission is realized integrally with a hollow shaft (33a) that is rotatably supported in the housing (10) and detachably connected to the rear wheel drive shaft (6), e.g., by means of a feather key (34).

9. The driving mechanism according to one of Claims 1-8, **characterized in that** an overload clutch (67, 68, 69) is provided in the drive train.

10. The driving mechanism according to Claim 8 or 9, **characterized in that** the hollow shaft (33) is connected to the rear wheel drive shaft (6) by means of an elastic coupling (36), e.g., a rubber element, and/or a slip clutch (37).

11. The driving mechanism according to one of Claims 1-10, **characterized in that** the transmission (26) is realized in the form of a multi-gear shift transmission.

12. The driving mechanism according to Claim 11, **characterized in that** the last transmission stage (II) of a multi-stage transmission (26) is realized in the form of a shift transmission.

13. The driving mechanism according to Claim 11 or 12, **characterized in that** a shifting rocker (66) arranged on the steering wheel (3) is assigned to the shift transmission (26) and connected to a shifting rod (49) of the shift transmission (26) by means of a cable pull or Bowden cable (61).

14. The driving mechanism according to one of Claims 1-13, **characterized in that** the vehicle chassis consists of a tubular frame (2), and **in that** the housing (10) is mounted on at least one frame tube (2a, 2b) by means of a screw-type pressure clamp (42).

15. The driving mechanism according to one of Claims 1-13, **characterized in that** the vehicle chassis consists of a tubular frame (2), and **in that** the housing (10) partially fills out the intermediate space between two parallel frame tubes (2a, 2b), wherein said housing is mounted between the two frame tubes (2a, 2b) by means of at least one separable clamp connection, e.g., a screw clamp connection (43) or a band clamp connection (44).

16. The driving mechanism according to one of Claims 1-15, **characterized in that** the gear transmission (26) consists of a two-stage transmission, and **in that** the driven gear (29) of the first transmission stage (I) and the driving gear (30) of the second transmission stage (II) are arranged on a common countershaft or intermediate shaft (31).

17. The driving mechanism according to Claim 16, **characterized in that** the gears (27, 29) of the first transmission stage (I) are realized in the form of change gear wheels with variable wheel diameters in order to realize different reduction ratios.

18. The driving mechanism according to Claim 17, **characterized in that** the part of the housing (10) that encloses the change gear wheels is realized in the form of a removable cover (32).

19. The driving mechanism according to one of Claims 16-18, **characterized in that** a balancing weight (53) in the form of a gear is rotatably supported on the countershaft (31) and driven by a gear (54) of identical diameter that is arranged on the crankshaft (17).

20. The driving mechanism according to one of Claims 16-19, **characterized in that** a starter gear (55) is arranged on the crankshaft or the engine shaft (17, 17a) and driven by a starter (56) via an intermediate starter reduction gear (57).

21. The driving mechanism according to one of Claims 16-20, **characterized in that** a cooling water pump (59) is arranged coaxial to the countershaft (31) and driven by the countershaft (31).

22. A kart with a driving mechanism according to one of Claims 1-21.

## Revendications

1. Dispositif d'entraînement de kart comprenant un moteur à combustion sous la forme d'un moteur à piston alternatif ou à piston rotatif comme source d'entraînement et une transmission à engrenage de démultiplication (26) entre le moteur à combustion et un arbre d'entraînement de roue arrière de kart (6), la roue dentée d'entraînement (27) de la transmission (26) étant disposée sur le vilebrequin (17) ou l'arbre moteur (17a) et la roue dentée de sortie (33) de la transmission (26) sur l'arbre d'entraînement de roue arrière (6), **caractérisé en ce que** la transmission à engrenage (26) est logée avec le vilebrequin (10) du moteur à piston alternatif ou avec l'arbre moteur (17a) du moteur à piston rotatif dans un carter (10) commun, et **en ce que** la ou les distances d'axe (a, b) des roues dentées d'engrenage (27, 29 ; 30, 31) sont fixées de façon non modifiable dans le carter (10).

2. Dispositif d'entraînement selon la revendication 1, **caractérisé en ce que** le carter (10) commun est conçu de façon fermée.

3. Dispositif d'entraînement selon la revendication 1 ou 2, **caractérisé en ce que** la roue dentée d'entraînement (27) de la transmission (26) est logée de façon rotative sur le vilebrequin ou l'arbre moteur (17 ou 17a) et est reliée par un accouplement (28) au vilebrequin ou à l'arbre moteur (17 ou 17a).

4. Dispositif d'entraînement selon la revendication 3, **caractérisé en ce que** l'embrayage (28) est un embrayage centrifuge.

5. Dispositif d'entraînement selon l'une quelconque des revendications 1 à 4, **caractérisé en ce que** l'arbre d'entraînement de roue arrière (6) est logé de façon rotative dans le carter (10) commun.

6. Dispositif d'entraînement selon la revendication 5, **caractérisé en ce que** la roue dentée de sortie (33) de la transmission (26) est reliée de façon amovible à l'arbre d'entraînement de roue arrière (6) au moyen d'un élément de liaison, par exemple une vis (39), l'élément de liaison étant accessible au moyen d'une ouverture (40) pouvant être fermée dans le carter (10).

7. Dispositif d'entraînement selon la revendication 5 ou 6, **caractérisé en ce que** l'arbre d'entraînement de roue arrière (6) est conçu en trois parties, du fait qu'il présente une partie d'arbre (6') centrale et disposée de façon rotative dans le carter et deux autres parties d'arbre (6a, 6b), qui sont reliées sur une extrémité de façon amovible à la partie d'arbre (6') centrale, par exemple par assemblage à vis (41), et portent chacune sur leurs hautes extrémités une roue arrière (7).

8. Dispositif d'entraînement selon l'une quelconque des revendications 1 à 4, **caractérisé en ce que** la roue dentée de sortie (33) de la transmission est conçue d'une seule pièce avec un arbre creux (33a), qui est logé de façon rotative dans le carter (10) et est relié de façon amovible, par exemple au moyen d'un ressort d'ajustage (34), à l'arbre d'entraînement de roue arrière (6).

9. Dispositif d'entraînement selon l'une quelconque des revendications 1 à 8, **caractérisé en ce qu'**un accouplement à surcharge (67, 68, 69) est prévu dans l'arbre d'entraînement.

10. Dispositif d'entraînement selon la revendication 8 ou 9, **caractérisé en ce que** l'arbre creux (33a) est relié au moyen d'un accouplement (36) élastique, par exemple un élément en caoutchouc, et/ou au moyen d'un accouplement à glissement (37) à l'arbrè d'entraînement de roue arrière (6).

11. Dispositif d'entraînement l'une quelconque des revendications 1 à 10, **caractérisé en ce que** la transmission (26) est réalisée comme une boite manuelle à plusieurs vitesses.

12. Dispositif d'entraînement selon la revendication 11, **caractérisé en ce que** le niveau de transmission (II) est conçu comme une boite manuelle dans le cas d'une boite à plusieurs vitesses (26).

13. Dispositif d'entraînement selon la revendication 11 ou 12, **caractérisé en ce qu'**une bascule de changement de vitesse (66), disposée sur le volant (3), est attribuée à la boite manuelle (26), laquelle bascule est reliée à une tige de changement de vitesse (49) de la boite manuelle (26) au moyen d'une tirette à câble ou d'un câble sous gaine (61).

14. Dispositif d'entraînement selon l'une quelconque des revendications 1 à 13, **caractérisé en ce qu'**un cadre tubulaire (2) est prévu comme châssis, et le carter (10) est fixé avec au moins un étrier de serrage à vis (42) sur au moins un tube de cadre (2a, 2b).

15. Dispositif d'entraînement selon l'une quelconque des revendications 1 à 13, **caractérisé en ce qu'**un cadre tubulaire (2) est prévu comme châssis, et **en ce que** le carter (10) occupe partiellement l'espace intermédiaire entre deux tubes de cadre (2a, 2b) parallèles et est coincé au moyen d'au moins un assemblage de serrage amovible, par exemple un assemblage de serrage par vis (43) ou d'un assemblage de serrage par bande (44) entre les deux tubes de cadre (2a, 2b).

16. Dispositif d'entraînement selon l'une quelconque des revendications 1 à 15, **caractérisé en ce que** la transmission à engrenage (26) est conçue à deux niveaux et la roue dentée de sortie (29) du premier niveau de transmission (I) et la roue dentée d'entraînement (30) du second niveau de transmission (II) sont disposées sur un arbre de renvoi ou arbre intermédiaire (31) commun.

17. Dispositif d'entraînement selon la revendication 16, **caractérisé en ce que** les roues dentées (27, 29) du premier niveau de transmission (I) sont conçues comme des roues de changement de vitesse avec des diamètres de roue variables pour la réalisation de différents rapports de démultiplication.

18. Dispositif d'entraînement selon la revendication 17, **caractérisé en ce que** la partie, entourant les roues de changement de vitesse, du carter (10) est conçue comme un couvercle (32) amovible.

19. Dispositif d'entraînement selon l'une quelconque des revendications 16 à 18, **caractérisé en ce que** sur l'arbre de renvoi (31) est logé de façon pivotante un poids d'équilibrage (53) conçu comme une roue dentée, qui est entraîné par une roue dentée (54), disposée sur le vilebrequin (17), de même diamètre.

20. Dispositif d'entraînement selon l'une quelconque des revendications 16 à 19, **caractérisé en ce que** sur le vilebrequin ou l'arbre moteur (17, 17a) est disposée une roue dentée de starter (55), qui est entraînée par un starter (56) au moyen d'un engrenage de renvoi de starter (57) intercalé.

21. Dispositif d'entraînement selon l'une quelconque des revendications 16 à 20, **caractérisé en ce qu'**une pompe d'eau de refroidissement (59), qui est entraînée par l'arbre de renvoi (31), est disposée de façon coaxiale par rapport à l'arbre de renvoi (31).

22. Kart comprenant un dispositif d'entraînement selon l'une quelconque des revendications 1 à 21.
